# EUROPEAN PATENT SPECIFICATION

(11) **EP 1 090 786 B1**
(45) Date of publication and mention of the grant of the patent: **17.01.2007**
(21) Application number: 00917382.4
(22) Date of filing: 20.04.2000
(51) Int. Cl.: B60H 1/22, B60H 1/32, F25B 27/02

(54) **HEAT PUMP TYPE AIR CONDITIONER FOR VEHICLE**
WÄRMEPUMPENARTIGE KLIMAANLAGE FÜR EIN KRAFTFAHRZUEG
CONDITIONNEUR D'AIR DE TYPE POMPE A CHALEUR POUR VEHICULE

(30) Priority: 21.04.1999 JP 11418299
(43) Date of publication of application: 11.04.2001
(73) Proprietor: MITSUBISHI HEAVY INDUSTRIES, LTD., Tokyo 100-8315 (JP)
(72) Inventor: NISHIJIMA, Hideya Mitsu.Heavy Ind., Ltd. Refri., Nishi-kasugai-gun Aichi 452-8561 (JP); HIGUCHI, Toshiyuki Mitsu.Heavy Ind., Ltd. Refrig., Nishi-kasugai-gun Aichi 452-8561 (JP)
(74) Representative: Brykman, Georges
(86) International application number: PCT/JP2000/002583
(87) International publication number: WO 2000/064693

(56) References cited:
- JP-A- 8 230 448
- JP-A- 8 258 548
- JP-A- 2000 062 446
- JP-U- 61 162 772

## Description

### TECHNICAL FIELD

The present invention relates to a heat pump type air conditioner for a vehicle, and, in particular, to a heat pump type air conditioner for a vehicle which can improve comfortableness when the cabin of the vehicle is heated.

### BACKGROUND ART

In recent years, demands for improved ambient air quality have increased and there is interest in a global environmental issue.. Therefore, demands for low-pollution vehicles and alternative energy vehicles have increased. When the energy source of a vehicle is changed to natural gas, the conventional internal combustion engine provided in the vehicle can be operated using natural gas; therefore, it is not necessary to change the air conditioner provided with the vehicle.

The cooling compressor of the air conditioner is driven by the engine of the vehicle as a driving source when the conventional vehicle is idling. In contrast, when alternative energy vehicles, such as an electric vehicle, hybrid vehicle (which uses an electrically-driven motor and an engine together as a driving source), etc. are idling, the driving source of the cooling compressor, that is the engine of the vehicle, is stopped. Therefore, when a conventional air conditioner for vehicles is used in an alternative energy vehicle, it is necessary to provide a new driving source for the cooling compressor. Moreover, when the cabin of the vehicle is being heated, the conventional vehicle uses engine cooling water as a heating source. However, an electric vehicle has a problem that the electric vehicle does not contain engine cooling water. The hybrid vehicle has another problem that the hybrid vehicle cannot obtain a sufficient amount of heat from the engine cooling water, because the engine of the hybrid vehicle often stops and the temperature of the engine cooling water does not rise sufficiently.

Due to these problems, it has been suggested that a household heat pump type air conditioner be used as an air conditioner for electric vehicles and hybrid vehicles.

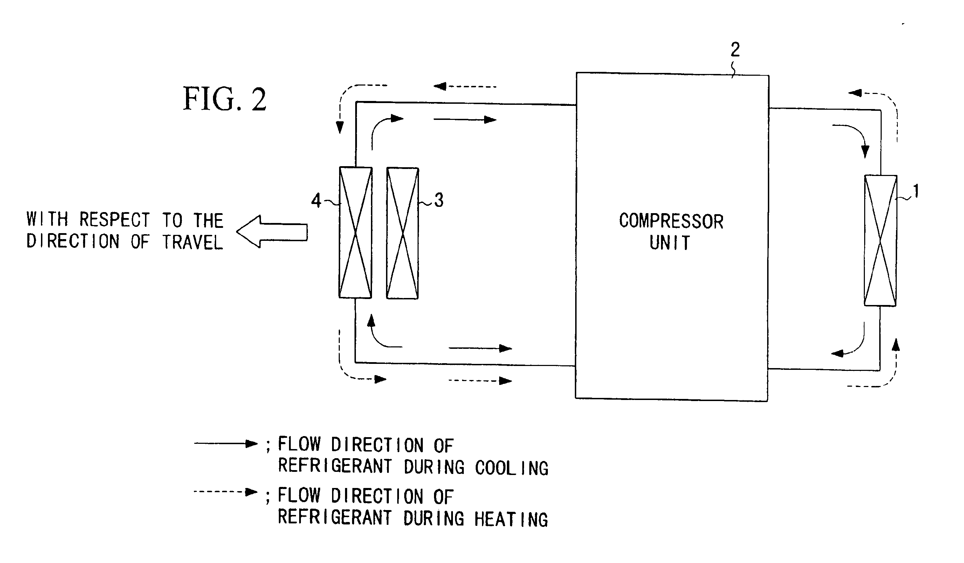

Fig. 2 shows a schematic diagram of the structure of a conventional heat pump type air conditioner for a vehicle. In Fig. 2, reference number 1 denotes an inner heat exchanger, 2 denotes a compressor unit, 3 denotes a radiator, and 4 denotes an outer heat exchanger. In the heat pump type air conditioner for a vehicle shown in Fig. 2, in order to make contact with wind generated by the motion of the vehicle, the outer heat exchanger 4 is arranged in the front of the radiator 3 with respect to the traveling direction of the vehicle. Moreover, a radiator (heat sink) for an electric motor provided in an electric vehicle or a hybrid vehicle and a radiator for cooling an engine provided in a hybrid vehicle can be used as the radiator 3.

In the conventional heat pump type air conditioner for a vehicle shown in Fig. 2, a refrigerant is circulated as explained below, and cools or heats the cabin of the vehicle.

When the cabin of the vehicle is heated, the refrigerant is circulated counterclockwise as indicated by the broken line arrow. A gas refrigerant of high temperature and high pressure due to the compressor in the compressor unit 2 is sent to the inner heat exchanger 1, and exchanges heat with the air inside the cabin. As a result, the air inside the cabin takes heat from the gas refrigerant of high temperature and high pressure and becomes warm air. Simultaneously, due to the heat of the gas refrigerant of high temperature and high pressure being taken by the air inside the cabin, the gas refrigerant condensed, liquefies, and becomes a liquid refrigerant of high temperature and high pressure.

The liquid refrigerant of high temperature and high pressure passes through the compressor unit 2, becomes a liquid refrigerant of low temperature and low pressure, and is sent in the outer heat exchanger 4. In the outer heat exchanger 4, the liquid refrigerant of low temperature and low pressure takes heat from air outside the cabin (outside air), evaporates, and becomes a gas refrigerant of low temperature and low pressure. The gas refrigerant of low temperature and low pressure is sent to the compressor unit 2 again, is compressed, and becomes a gas refrigerant of high temperature and high pressure. The refrigerant circulates in the process explained above. When the air inside the cabin is heated, the outer heat exchanger 4 works as an evaporator, and the inner heat exchanger 1 works as a condenser.

In contrast, when the inside the vehicle is cooled, the refrigerant is circulated clockwise as indicated by the unbroken line arrow. A gas refrigerant of high temperature and high pressure due to the compressor in the compressor unit 2 is sent to the outer heat exchanger 4, and exchanges heat with outside air. As a result, the gas refrigerant of high temperature and high pressure gives heat to the outside air, is condensed, liquefies, and becomes a liquid refrigerant of high temperature and high pressure. The liquid refrigerant of high temperature and high pressure passes through a restrictor in the compressor unit 2, becomes a liquid refrigerant of low temperature and low pressure, and is sent to the inner heat exchanger 1.

The liquid refrigerant of low temperature and low pressure absorbs heat from the air inside the cabin. Therefore, the air inside the cabin is cooled. Simultaneously, the liquid refrigerant of low temperature and low pressure is evaporated, and becomes a gas refrigerant of low temperature and low pressure. The gas refrigerant of low temperature and low pressure is sent to the compressor in compressor unit 2 again, is condensed, and becomes a gas refrigerant of high temperature and high pressure. The refrigerant circulates in the process explained above. When the air inside the cabin is cooled, the inner heat exchanger 1 works as an evaporator, and the outer heat exchanger 4 works as a condenser.

Document EP-A-1108575 which constitutes prior art according to Art. 54(3) EPC discloses a heat pump type air conditioner for a vehicle in which a cooling operation or a heating operation can be carried out. It comprises a couple of heat exchangers sandwiching the radiator. A selector valve is provided to select the direction of the flow of the refrigerant in the outer exchangers. However, this document does not disclose a selector valve which is operable to enable the simultaneous use of both heat exchangers.

Document US-A-4688394 discloses a heat pump air conditioner in which a cooling or a heating operation can be carried out by selecting the flow direction of a refrigerant. According to one embodiment, two outer heat exchangers are provided, one for cooling and the other for heating. The heat exchangers are both located behind the radiator of the car, with respect to the direction of the air flow.

### PROBLEMS TO BE SOLVED

The conventional heat pump type air conditioner for a vehicle has the following problems when the air inside the cabin is cooled and heated.

In general, when the temperature of the outside air is low and the air inside the cabin has been heated, it is necessary to remove frost formed in the outer heat exchanger 4 in the heat pump type air conditioner. In other words, a defrost operation is necessary for the outer heat exchanger 4. The defrost operation of the outer heat exchanger 4 is carried out by stopping the heating, and cooling temporarily. Therefore, cold air is brown into the cabin. This is contrary to the occupants of the vehicles wishes and the comfort of the occupants is lost.

It is therefore an object of the present invention to provide a heat pump type air conditioner for a vehicle in which the need for a defrost operation is minimized and which can improve the comfort inside the cabin when the air inside the cabin is heated.

### BRIEF DESCRIPTION OF THE DRAWINGS

FIG. 1 is a system diagram showing a preferred embodiment of the heat pump type air conditioner for a vehicle of the present invention.
FIG. 2 is a system diagram showing a conventional heat pump type air conditioner for a vehicle.

### DETAILED EXPLANATION OF INVENTION

In order to achieve the object, the present invention is defined in appended claim 1.

According to the heat pump type air conditioner for a vehicle, the air conditioner comprises a plurality of outer heat exchangers, of which at least one is arranged in the back of the heat source with respect to the flow direction of the outside air. Therefore, it is possible to minimize a generation of frost during a heating operation. In particular, when the refrigerant passage in which the refrigerant flows is selected by the restrictor, it is possible to select the most preferable outer heat exchanger, in accordance with need. In other words, during heating operation, when the restrictor allows the refrigerant to flow to the outer heat exchanger arranged in the back of the heat source with respect to the flow direction of the outside air, the refrigerant exchanges heat with outside air having a relatively high temperature which contacts with the heat source. Therefore, a frost is hardly formed at the outer heat exchanger. In contrast, during cooling operation, when the restrictor allows the refrigerant to flow to the outer heat exchanger arranged in the front of the heat source with respect to the flow direction of the outside air, the refrigerant exchanges heat with outside air having a relatively low temperature which does not contact with the heat source.

Consequently, according to the heat pump type air conditioner for a vehicle of the present invention, it is possible to use the outside air of which the temperature is remarkably different from the temperature of the refrigerant Therefore, efficiency of heat exchange in the outer heat exchanger can be improved.

In particular, it is possible to minimize a frost generation during heating operation. Therefore, periods needed for a defrost operation can be reduced, and comfort air conditioning can be achieved. The effects that comfort inside the cabin can be achieved can be obtained.

### MODES FOR CARRYING OUT THE INVENTION

Referring to the Figures, a preferred embodiment of the heat pump type air conditioner for a vehicle according to the present invention will be explained.

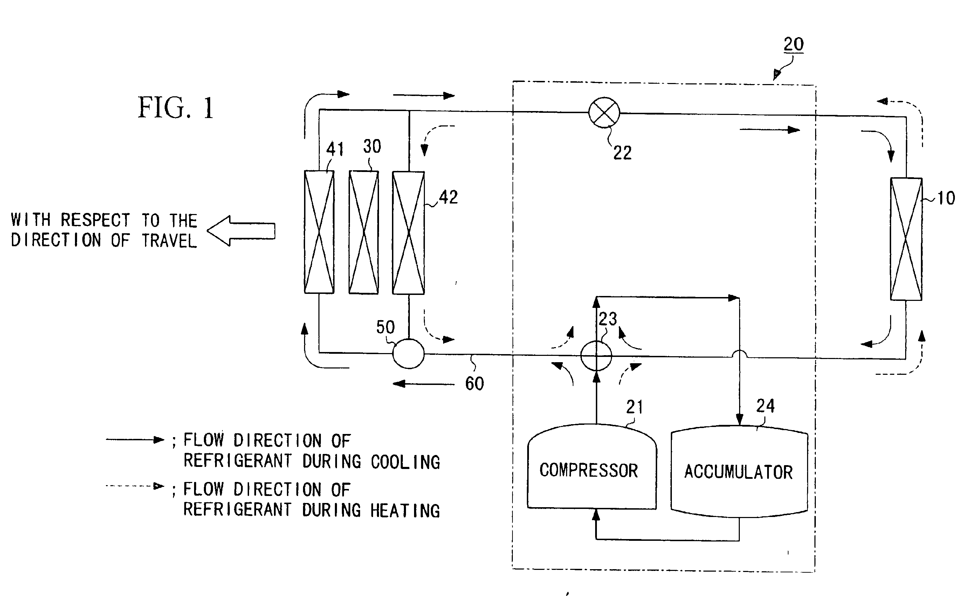

In Fig. 1, reference number 10 denotes an inner heat exchanger, 20 denotes a compressor unit, 3 denotes a radiator which is a heat source, 41 and 42 denote outer heat exchangers, 50 denotes a selector valve comprising a selector device, and 60 denotes a refrigerant passage.

The inner heat exchanger 10 is arranged in the cabin, and supplies adjusted air into the cabin. Usually, the inner heat exchanger 10 comprises an inner unit together with a fan. A refrigerant is supplied to the inner heat exchanger 10 from the compressor unit 20. However, the flow direction and the conditions of the refrigerant when the cabin is cooled are different from the flow direction and the conditions of the refrigerant when the cabin is heated.

Specifically, when the cabin is heated, the gas refrigerant of high temperature and high pressure is supplied into the inner heat exchanger 10, and exchanges heat with air drawn from the cabin. Heat of the gas refrigerant of high temperature and high pressure is absorbed by the air drawn from the cabin. The gas refrigerant is condensed, and liquefies. Since the air drawn from the cabin absorbs heat from the gas refrigerant, the air becomes heated.

In contrast, when the cabin is cooled, the liquid refrigerant of low temperature and low pressure absorbs heat from air drawn from the cabin in the inner heat exchanger 10. Therefore, air drawn from the cabin is cooled. The cool air is supplied to the cabin. Since the liquid refrigerant of low temperature and low pressure absorbs heat from the air drawn from the cabin, the liquid refrigerant evaporates, and becomes the gas refrigerant of low temperature and low pressure.

In general, the compressor unit 20 is arranged at a suitable position outside of the cabin, such as in the engine compartment of the vehicle provided in an engine as a driving source. Moreover, when the vehicle is an electric vehicle, the motor for driving is arranged in a position such as the engine compartment in front of the vehicle body. When the vehicle is a hybrid vehicle, the motor and the engine for travelling are arranged at a position such as the engine compartment in front of the vehicle body.

The compressor unit 20 comprises mainly the compressor 21, the restrictor 22, the four way valve 23, and the accumulator 24. The compressor unit 20, the above-mentioned inner heat exchanger 10, the below-mentioned outer heat exchangers 41 and 42 are connected by the refrigerant passage 60, and make a refrigerant circuit.

The compressor 21 compresses the gas refrigerant, makes the gas refrigerant of high temperature and high pressure, sends the gas refrigerant into the four way valve 23. The four way valve 23 changes the flow direction of the refrigerant in the refrigerant circuit 60. Therefore, the four way valve 23 selects either the heating operation or the cooling operation. The restrictor 22 decompresses and expands the liquid refrigerant of high temperature and high pressure, and changes the liquid refrigerant of high temperature and high pressure into the liquid (mist) refrigerant of low temperature and low pressure. For example, a capillary tube, an expansion valve, etc. can be used as the restrictor 22. Moreover, the accumulator 24 is arranged in order to remove the liquid components contained in the gas refrigerant supplied into the compressor 21.

As a radiator 30, for example, the heat sink for the driving motor provided in electric vehicles, the radiator for cooling the engine provided in hybrid cars, etc. can be used. Due to its function, the radiator 30 is arranged at a position in the vehicle, at which exposure easily to outside air. When the vehicle is an ordinary sedan, the radiator 30 is arranged in the front end position with respect to the traveling direction of the vehicle, at which contact with the wind generated by the motion of the vehicle occurs readily, for example, in the space such as the engine compartment.

The outer heat exchangers 41 and 42 are a pair of heat exchanger arranged so as to sandwich the radiator 30 with respect to the traveling direction of the vehicle. Moreover, the outer heat exchangers 41 and 42 are arranged in parallel with respect to the refrigerant circuit 60 comprising the above-mentioned inner heat exchanger 10, compressor unit 20, etc. Moreover, the traveling course of the vehicle and the flow course of the outside air are in the same line, and the traveling direction of the vehicle and the flow direction of the outside air are opposite. That is, the front side with respect to the traveling direction of the vehicle corresponds to the back side with respect to the flow direction of the outside air. The refrigerant is supplied to the outer heat exchangers 41 and 42 from the compressor unit 20. However, the flow direction and the conditions of the refrigerant when the cabin is cooled are different from the flow direction and the conditions of the refrigerant when the cabin is heated.

When the cabin is heated, the liquid refrigerant of low temperature and low pressure absorbs heat from the outside air in the outer heat exchangers 41 and 42, evaporates, becomes the gas refrigerant of low temperature and low pressure, and is sent into the compressor 21. In this case, the outer heat exchangers 41 and 42 work as evaporators.

When the cabin is cooled, heat of the gas refrigerant of high temperature and high pressure is absorbed by the outside air in the outer heat exchangers 41 and 42. Then, the gas refrigerant of high temperature and high pressure is condensed, liquefies, becomes the liquid refrigerant of high temperature and high pressure, and is sent to the restrictor 22 and the inner heat exchanger 10. In this case, the outer heat exchangers 41 and 42 work as condensers.

The outer heat exchangers 41 and 42 are arranged so as to sandwich the radiator 30 and are arranged in parallel with respect to the refrigerant circuit 60 in the heat pump type air conditioner for vehicle of the present invention, as explained above. In addition, the selector valve 50 which can select the flow direction of the refrigerant is arranged in the refrigerant circuit 60 between the outer heat exchangers 41 and 42 and the compressor unit 20. As the selector valve 50, a three-way solenoid valve which can select the flow direction of the refrigerant between the outer heat exchanger 41 and the outer heat exchanger 42 is suitably used.

Moreover, the selector valve 50 can allow the refrigerant to flow three directions, depending on the conditions. In other words, the selector valve 50 can allow the refrigerant to flow to both outer heat exchangers 41 and 42 other than only to the outer heat exchanger 41 or only to the outer heat exchanger 42, in accordance with need.

The operations of the heat pump type air conditioner for a vehicle of the present invention will be explained below specifically by dividing the heating operation and cooling operation.

The flow direction of the refrigerant when the cabin is heated is indicated by the broken line arrow in Fig. 1. The selector valve 50 is adjusted so as to allow the refrigerant to flow only to the outer heat exchanger 42 arranged in back of the radiator 30 with respect to the flow direction of the outside air.

The compressor 21 draws and compresses the gas refrigerant of low temperature and low pressure, changes the gas refrigerant into the gas refrigerant of high temperature and high pressure, and sends the gas refrigerant to the four way valve 23. The four way valve 23 is adjusted so as to allow the refrigerant to flow to the inner heat exchanger 10. Therefore, the gas refrigerant of high temperature and high pressure is sent to the inner heat exchanger 10 through the refrigerant passage 60, and exchanges heat with the air drawn from the cabin in the inner heat exchanger 10. Namely, heat of gas refrigerant of high temperature and high pressure is absorbed by the air drawn from the cabin. Then, the gas refrigerant condenses, liquefies, and changes into the liquid refrigerant of high temperature and high pressure. In contrast, since the air drawn from the cabin absorbs heat from the gas refrigerant, the air becomes heated. Then, the heated air is supplied in the cabin.

The liquid refrigerant of high temperature and high pressure discharged from the inner heat exchanger 10 decompresses and expands in the restrictor 22 comprising the compressor unit 20, and changes into the liquid refrigerant of low temperature and low pressure. Then, the liquid refrigerant is sent to the outer heat exchanger 42. The outer heat exchanger 42 is arranged in back of the radiator 30 which effuses heat generated in the driving motor, with respect to the flow direction of the wind generated by the motion of the vehicle. Therefore, the outside air, such as the wind generated by the motion of the vehicle and the air drawn by a fan not shown in the Figures, is heated by contacting with the radiator 30. The liquid refrigerant of low temperature and low pressure exchanges heat with the outside air heated by the radiator 30, that is, the liquid refrigerant absorbs heat from the outside air, evaporates, and changes into the gas refrigerant of low temperature and low pressure. In other words, the liquid refrigerant of low temperature and low pressure is heated by the outside air having a relatively high temperature, evaporates, and changes into the gas refrigerant of low temperature and low pressure. Therefore, the efficiency of heat exchange between the refrigerant and outside air is improved. In addition, frost is hardly formed at the outer heat exchanger 42.

Consequently, during heating operation, periods needed for a defrost operation and frequency of the defrost operation are remarkably decreased. Moreover, blowing cooled air during heating operation gives discomfort to the occupants of the vehicle. However, according to the heat pump type air conditioner for vehicle of the present invention, periods needed for blowing cooled air and frequency of blowing cooled air can be decreased.

The gas refrigerant of low temperature and low pressure formed as explained above passes through the selector valve 50, and is sent to the four way valve 23 again. After removing liquid components by the accumulator 24,the gas refrigerant of low temperature and low pressure is drawn by the compressor 21, and compressed in the compressor 21. The heating operation of the cabin is carried out by repeating such circulation of the refrigerant.

The flow direction of the refrigerant when the cabin is cooled is indicated by the unbroken line arrow in Fig. 1. The selector valve 50 is adjusted so as to allow the refrigerant to flow only to the outer heat exchanger 41 arranged in the front of the radiator 30 with respect to the flow direction of the outside air.

The compressor 21 draws and compresses the gas refrigerant of low temperature and low pressure, changes the gas refrigerant into the gas refrigerant of high temperature and high pressure, and sends the gas refrigerant into the four way valve 23. The four way valve 23 is adjusted so as to allow the refrigerant to flow to the outer heat exchanger 41. Therefore, the gas refrigerant of high temperature and high pressure is sent to the outer heat exchanger 41 through the refrigerant passage 60, and exchanges heat with the outside air, such as the wind generated by the motion of the vehicle and the air drawn by a fan not shown in the Figures. After that, the gas refrigerant condenses, liquefies, and changes into the liquid refrigerant of high temperature and high pressure.. Moreover, the outside air does not contact with the radiator 30 before the heat exchange in the outer heat exchanger 41, and is relatively cooled. Heat of the gas refrigerant of high temperature and high pressure is absorbed by the outside air. Since the temperature of the outside air is lower, the efficiency of the heat exchange between the outside air and the gas refrigerant is more increased.

After that, the liquid refrigerant of high temperature and high pressure is sent to the restrictor 22, and changes into the liquid refrigerant of low temperature and low pressure during passing through the restrictor 22. The liquid refrigerant of low temperature and low pressure is sent to the inner heat exchanger 10, and exchanges heat with the air drawn from the cabin. The liquid refrigerant absorbs heat from the air drawn from the cabin, evaporates, liquefies, and changes into the gas refrigerant of low temperature and low pressure. Simultaneously, since heat of the air drawn from the cabin is absorbed by the liquid refrigerant, the air becomes cooled, and supplied in the cabin.

The gas refrigerant of low temperature and low pressure discharged from the inner heat exchanger 10, passes through the four way valve 23 again, and is sent to the accumulator 24. Liquid components contained in the gas refrigerant is removed in the accumulator 24. The gas refrigerant is drawn by the compressor 21 again, and compressed in the compressor 21. The cooling operation of the cabin is carried out by repeating such circulation of the refrigerant.

According to the heat pump type air conditioner for a vehicle of the present invention, during the heating operation, the outside air having a relatively high temperature can be sent to the outer heat exchanger 42, and the refrigerant absorbs heat of the outside air. In contrast, during the cooling operation, the outside air having a relatively low temperature can be sent to the outer heat exchanger 41, and heat of the refrigerant is absorbed by the outside air. Namely, efficiency of heat exchange in the outer heat exchangers 41 and 42 is improved during both the cooling operation and the heating operation. In particular, during heating operation, the refrigerant absorbs heat of the outside air having relatively high temperature; therefore, frost is hardly formed at the outer heat exchanger 42, and periods needed for a defrost operation and frequency of the defrost operation are remarkably decreased.

Moreover, the only outer heat exchanger 41 is used for the cooling operation and the only outer heat exchanger 42 is used for the heating operation in the above preferred embodiment However, it is possible to use the two outer heat exchangers 41 and 42 temporary at the same time and to use the two outer heat exchangers 41 and 42 alternatively at a suitable interval. In addition, it is possible to change the position, number, and the structure of the selector valve 50 to be arranged, in accordance with the change of design.

## Claims

1. A heat pump type air conditioner for a vehicle in which a cooling operation or a heating operation is carried out by selecting a flow direction of a refrigerant comprising:
an inner heat exchanger (10) for exchanging heat between a refrigerant and air inside of a cabin;
a plurality of outer heat exchangers (41,42) for exchanging heat between the refrigerant and outside air;
a compressor unit comprising a compressor (21), a restrictor (22), a four way valve (23); and
a refrigerant passage (60) connecting the inner heat exchanger (10), the outer heat exchangers (41,42), and the compressor unit, wherein said outer heat exchangers (41,42) are arranged so as to sandwich a heat source (30) in parallel;
**characterized in that** a selector valve (50) to select a direction of flow of the refrigerant is arranged on the refrigerant passage (60) between the outer heat exchangers (41,42) and the compressor unit;
and said outer heat exchangers (41,42) arranged to sandwich said heat source (30) in parallel can be used simultaneously by adjusting said selector valve (50).

2. A heat pump type air conditioner for a vehicle according to claim 1 , wherein said heat source (30) is a radiator.

3. A heat pump type air conditioner for a vehicle according to claim 1 , wherein said heat source (30) is a heat sink.

4. A heat pump type air conditioner for a vehicle according to one of claims 1 to 4, wherein said selector valve (50) allows the refrigerant to flow to the outer heat exchanger (42) arranged in the back of the heat source with respect to the flow direction of the outside air during heating operation.

5. A heat pump type air conditioner for a vehicle according to one of claim 1 to 4, wherein said selector valve (50) allows the refrigerant to flow to the outer heat exchanger (41) arranged in the front of the heat source with respect to the flow direction of the outside air during cooling operation.

## Patentansprüche

1. Wärmepumpenartige Klimaanlage für ein Fahrzeug, in der eine Kühloperation oder eine Erwärmungsoperation durch Auswahl der Flussrichtung eines Kühlmittels durchgeführt wird, wobei die Klimaanlage aufweist:
einen inneren Wärmetauscher (10) zum Austausch von Wärme zwischen einem Kühlmittel und Luft innerhalb eines Passagierraums;
mehrere äußere Wärmetauscher (41, 42) zum Austausch von Wärme zwischen dem Kühlmittel und der Außenluft;
eine Kompressoreinheit mit einem Kompressor (21), einer Drossel (22) und einem Vierwegeventil (23); und
einen Kühlmitteldurchgang (60), der den inneren Wärmetauscher (10), die äußeren Wärmetauscher (41, 42) und die Kompressoreinheit miteinander verbindet, wobei die äußeren Wärmetauscher (41, 42) derart angeordnet sind, dass sie eine Wärmequelle (30) zwischen sich und parallel aufnehmen,
**dadurch gekennzeichnet, dass** ein Auswahlventil (50) zum Auswählen einer Richtung des Kühlmittelstroms an dem Kühlmitteldurchgang (60) zwischen den äußeren Wärmetauschern (41, 42) und der Kompressoreinheit angeordnet ist;
und dass die äußeren Wärmetauscher (41, 42), die angeordnet sind, um die Wärmequelle (30) parallel zwischen sich aufzunehmen, simultan durch Einstellen des Auswahlventils (50) verwendet werden können.

2. Wärmepumpeartige Klimaanlage für ein Fahrzeug nach Anspruch 1, wobei die Wärmequelle (30) ein Radiator ist.

3. Wärmepumpeartige Klimaanlage für ein Fahrzeug nach Anspruch 1, wobei die Wärmequelle (30) ein Kühlkörper ist.

4. Wärmepumpeartige Klimaanlage für ein Fahrzeug nach einem der Ansprüche 1 bis 4, wobei das Auswahlventil (50) es dem Kühlmittel gestattet, zu dem äußeren Wärmetauscher (42), der hinter der Wärmequelle in Bezug auf die Flussrichtung der Außenluft während der Erwärmungsoperation angeordnet ist, zu strömen.

5. Wärmepumpeartige Klimaanlage für ein Fahrzeug nach einem der Ansprüche 1 bis 4, wobei das Auswahlventil (50) es dem Kühlmittel erlaubt, zu dem äußeren Wärmetauscher (41), der vor der Wärmequelle in Bezug auf die Flussrichtung der Außenluft während der Kühloperation angeordnet ist, zu strömen.

## Revendications

1. Conditionneur d'air du type pompe à chaleur pour un véhicule dans lequel une opération de refroidissement ou une opération de chauffage est réalisée en sélectionnant un sens d'écoulement d'un réfrigérant, comprenant :
un échangeur thermique interne (10) pour échanger de la chaleur entre un réfrigérant et l'air à l'intérieur d'une cabine ;
une pluralité d'échangeurs thermiques externes (41, 42) pour échanger de la chaleur entre le réfrigérant et l'air extérieur ;
une unité de compression comprenant un compresseur (21), un réducteur (22), une vanne à quatre voies (23) ; et
un passage de réfrigérant (60) raccordant l'échangeur thermique interne (10), les échangeurs thermiques externes (41, 42), et l'unité de compression, dans lequel lesdits échangeurs thermiques externes (41, 42) sont disposés de manière à prendre en sandwich une source de chaleur (30) en parallèle ;
**caractérisé en ce qu'**un clapet sélecteur (50) destiné à sélectionner un sens d'écoulement du réfrigérant est disposé sur le passage de réfrigérant (60) entre les échangeurs thermiques externes (41, 42) et l'unité de compression ;
et lesdits échangeurs thermiques externes (41, 42) disposés pour prendre en sandwich ladite source de chaleur (30) en parallèle peuvent être utilisés simultanément en réglant ledit clapet sélecteur (50).

2. Conditionneur d'air du type pompe à chaleur pour un véhicule selon la revendication 1, dans lequel ladite source de chaleur (30) est un radiateur.

3. Conditionneur d'air du type pompe à chaleur pour un véhicule selon la revendication 1, dans lequel ladite source de chaleur (30) est un puits thermique.

4. Conditionneur d'air du type pompe à chaleur pour un véhicule selon l'une des revendications 1 à 4, dans lequel ledit clapet sélecteur (50) permet au réfrigérant de s'écouler vers l'échangeur thermique externe (42) disposé à l'arrière de la source de chaleur relativement au sens d'écoulement de l'air extérieur durant une opération de chauffage.

5. Conditionneur d'air du type pompe à chaleur pour un véhicule selon l'une des revendications 1 à 4, dans lequel ledit clapet sélecteur (50) permet au réfrigérant de s'écouler vers l'échangeur thermique externe (41) disposé à l'avant de la source de chaleur relativement au sens d'écoulement de l'air extérieur durant une opération de refroidissement.
